Europäisches Patentamt

European Patent Office

Office européen des brevets

(11) Veröffentlichungsnummer: **0 475 203 A2**

## (12) EUROPÄISCHE PATENTANMELDUNG

(21) Anmeldenummer: **91114513.4**

(22) Anmeldetag: **29.08.91**

(51) Int. Cl.5: **C08L 57/00**, //(C08L57/00, 35:06,25:12)

(30) Priorität: **11.09.90 DE 4028749**

(43) Veröffentlichungstag der Anmeldung:
**18.03.92 Patentblatt 92/12**

(84) Benannte Vertragsstaaten:
**DE FR GB IT**

(71) Anmelder: **BAYER AG**

**W-5090 Leverkusen 1 Bayerwerk(DE)**

(72) Erfinder: **Lindner, Christian, Dr.**
**Im Wasserblech 11**
**W-500 Köln 91(DE)**
Erfinder: **Eichenauer, Herbert, Dr.**
**Gustav-Heinemann-Strasse 3**
**W-4047 Dormagen 1(DE)**
Erfinder: **Lütjens, Holger, Dr.**
**Rybniker Strasse 12**
**W-5000 Köln 80(DE)**
Erfinder: **Braese, Hans-Eberhard, Dipl.-Ing.**
**Käthe-Kollwitz-Strasse 3**
**W-5000 Köln 71(DE)**

(54) **Wärmeformbeständige Chemiewerkstoffe.**

(57) Als thermoplastische Formmasse einsetzbare Chemiewerkstoffe aus
A) einem thermoplastischen Vinylpolymerisat und
B) einem Gemisch aus
B1) einem Copolymerisat von 35 bis 49 Gew.-% Maleinsäureanhydrid und 65 bis 51 Gew.-% Styrol und
B2) einem Copolymerisat von Styrol, $\alpha$-Methylstyrol oder Mischungen daraus einerseits und Acrylnitril andererseits mit einem Acrylnitrilgehalt von 35 bis 60 Gew.-% [bezogen auf B2)]
und ein Verfahren zu ihrer Herstellung.

EP 0 475 203 A2

EP 0 475 203 A2

Die Erfindung betrifft thermoplastische Formmassen mit verbesserter Wärmeformbeständigkeit auf der Basis thermoplastischer Vinylpolymerisate und Gemischen spezieller Styrolpolymerisate.

Thermoplastische Polymerisate, wie Polystyrol, Styrolcopolymerisate und Polyvinylchlorid werden in großem Umfang zur Herstellung von Formkörpern verwendet. Der Einsatz solcher Formkörper ist nur in einem Temperaturbereich möglich, in dem die Polymerisate noch nicht erweichen. Um den Anwendungsbereich der Polymerisate zu vergrößern, also nach höheren Temperaturen hin zu erweitern, kann man Comonomere durch Copolymerisation einbauen (z.B. Maleinsäureanhydrid oder -imid); die die Glastemperatur der Polymerisate erhöhen, oder man kann anders aufgebaute Polymerisate mit höherer Glastemperatur zumischen.

Der erste Weg ist praktisch nur selten gangbar, da durch die Copolymerisation ein gänzlich anderes Polymerisat erzeugt wird, mit anderen Eigenschaften, das ungeeignet sein kann, um ein etabliertes Produkt zu substituieren. Der zweite Weg ist nur in seltenen Fällen gangbar, weil Polymerisate meist unverträglich sind.

Es besteht daher Bedarf an Polymerisaten mit hoher Wärmeformbeständigkeit, die mit anderen Polymerisaten genügend verträglich sind, um gute mechanische Grundeigenschaften der Mischungen zu gewährleisten. Diese Polymerisate müssen abwandelbar sein, damit ihre Verträglichkeit und Wärmestandfestigkeit dem jeweiligen Verwendungszweck angepaßt werden können. Auch müssen sich die Mischungen mit Füllstoffen, Additiven und Modifikatoren ausrüsten lassen.

Es wurde gefunden, daß Gemische aus Styrolcopolymerisaten mit hohem Acrylnitrilgehalt und Styrolcopolymerisaten mit hohem Maleinsäureanhydridgehalt diese Eigenschaften besitzen; die Eigenschaften dieser Gemische lassen sich leicht durch Änderung des Mischungsverhältnisses der beiden Styrolcopolymerisate abwandeln. Diese Gemische sind mit den verschiedensten technischen Polymerisaten verträglich.

Gegenstand der Erfindung sind somit
als thermoplastische Formmassen einsetzbare Chemiewerkstoffe aus

A) einem thermoplastischen Vinylpolymerisat und

B) einem Gemisch aus

B1) einem Copolymerisat von 35 bis 49 Gew.-% Maleinsäureanhydrid und 65 bis 51 Gew.-% Styrol und

B2) einem Copolymerisat von Styrol, α-Methylstyrol oder Mischungen daraus einerseits und Acrylnitril andererseits mit einem Acrylnitrilgehalt von 35 bis 60 Gew.-% [bezogen auf B2)].

Ein weiterer Gegenstand der Erfindung ist ein Verfahren zur Herstellung solcher Chemiewerkstoffe, das dadurch gekennzeichnet ist, daß in einer ersten Stufe die Copolymerisate B1) und B2) in Anwesenheit eines Lösungsmittels für B1) und B2) vermischt, in einer zweiten Stufe das Gemisch von B1) und B2) aus der Lösung abgetrennt und in einer dritten Stufe das Gemisch von B1) und B2) mit dem thermoplastischen Vinylpolymerisat A) vermischt wird.

Thermoplastische Vinylpolymerisate A) im Sinne der Erfindung sind z.B. thermoplastische Homo- und Interpolymerisate aus Styrol, α-Methylstyrol, Maleinsäureanhydrid, Maleinimid, Acrylnitril, Alkylmethacrylat, im Falle von Styrol/Acrylnitrilcopolymerisaten ist der Acrylnitrilgehalt auf maximal 30 Gew.-% begrenzt, insbesondere Styrol-Acrylnitril-Copolymerisate mit Acrylnitrilgehalten von 10 bis 30 Gew.-%, α-Methylstyrol-Acrylnitril-Copolymerisate (mit Acrylnitrilgehalten von 25 bis 35 Gew.-%), Polymethylmethacrylat, Copolymerisate von Styrol und/oder α-Methylstyrol und Methylmethacrylat, Copolymerisate von Styrol mit bis zu 20 Gew.-% Maleinsäurederivaten, Polyvinylchlorid und Polyvinylidenchlorid.

Besonders bevorzugte thermoplastische Vinylpolymerisate A) sind Polyvinylchlorid (PVC), Styrol-Acrylnitril-Copolymerisate (SAN), Styrol-Maleinsäureanhydrid-Copolymerisate (SMA), Acrylnitril-Methylmethacrylat-Copolymerisate (AMS), Polymethylmethacrylat (PMMA).

Geeignet als A) sind auch die oben genannten Polymerisate in mit Kautschuken modifizierter Form; beispielsweise Pfropfpolymerisate von Styrolcopolymerisaten auf Kautschuke (Butadien-Acrylat-, Olefinkautschuke) (= ABS, ASA, EPAS), kautschukmodifizierte Polymethylmethacrylat-Polymerisate sowie kautschukmodifiziertes Polyvinylchlorid, z.B. Pfropfpolymerisate von Vinylchlorid auf Kautschuke.

Diese thermoplastischen Vinylpolymerisate sind bekannt. Copolymerisate B1) im Sinne der Erfindung, enthalten große Mengen an einpolymerisiertem Maleinsäureanhydrid und sind selbst nicht thermoplastisch verarbeitbar; sie bestehen bevorzugt aus 35 bis 49 Gew.-%, insbesondere 45 bis 49 Gew.-%, bevorzugt 50 Mol-% Maleinsäureanhydrid-Einheiten und 65 bis 51 Gew.-%, insbesondere 55 bis 51 Gew.-%, bevorzugt 50 Mol% Styrol-Einheiten, sind also bevorzugt alternierend aufgebaut und können auch als "Styromal" bezeichnet werden.

Copolymerisate B2) im Sinne der Erfindung sind Copolymerisate aus Styrol, α-Methylstyrol oder Mischungen daraus einerseits und Acrylnitril andererseits mit einem Acrylnitrilgehalt von 35 bis 60 Gew.-%, insbesondere 45 bis 55 Gew.-% [bezogen auf B2)].

2

B1) und B2) sind in ihrem chemischen Aufbau immer verschieden von A).

Bevorzugte erfindungsgemäße Chemiewerkstoffe bestehen aus 90 bis 20, insbesondere 80 bis 40 Gew.-% A) und 10 bis 80, insbesondere 20 bis 60 Gew.-% B) [bezogen auf Chemiewerkstoff].

Die Copolymerisate B2) werden durch übliche radikalische Copolymerisation der Monomeren hergestellt, insbesondere durch wässrige Emulsionspolymerisation, Suspensionspolymerisation, Lösungspolymerisation oder Massepolymerisation. Dabei sind halb- oder vollkontinuierliche Verfahren bevorzugt, um eine ausreichende chemische Einheitlichkeit von B2) zu gewährleisten.

Die Copolymerisate B1) werden durch radikalische Polymerisation in Flüssigkeiten, z.B. Ketonen, Aromaten, Amiden hergestellt. Bei Einsatz der Monomeren im molaren Verhältnis von 1 : 1 reicht normalerweise eine diskontinuierliche bis chargenweise Polymerisationsführung aus. Die Polymerisate fallen dann als Lösungen oder Suspensionen an, aus denen sie durch übliche Fällung oder Filtration isoliert werden können.

Die erfindungsgemäßen Chemiewerkstoffe werden hergestellt, indem man eine separat vorgefertigte Mischung der Polymerisate B1) und B2) mit dem thermoplastischen Vinylpolymerisat A) vermischt (compoundiert).

Die Gemische aus B1) und B2) können problemlos hergestellt werden: Man kann B1) und B2) in einem geeigneten gemeinsamen Lösungsmittel auflösen und anschließend die Gemische fällen oder ausdampfen oder eine Lösung von B1) mit einer Schmelze von B2) mischen und danach ausdampfen. Geeignet sind im Prinzip alle Lösungsmittel, die die Polymeren B1) und B2) bei Temperaturen von 20 bis ca. 150°C lösen, insbesondere Aromaten wie Toluol, Ethylbenzol, Chlorbenzol; Ketone wie Aceton, Methylethylketon. Bevorzugt ist Ethylbenzol als Lösungsmittel und Isolieren des Gemisches mit Hochviskos- Aggregaten mit Ausdampfmöglichkeit wie Knetern oder Schnecken.

Bevorzugte Polymerisatmischungen B enthalten bis zu 70 Gew.-%, insbesondere bis zu 50 Gew.-% B1).

Wenn man die erfindungsgemäße Arbeitsweise nicht einhält also z.B. B1) und B2) nicht vormischt oder ohne Zuhilfenahme von Lösungsmitteln direkt vermischt, dann wird kein einwandfreier Chemiewerkstoff erhalten: Bei den dann erforderlichen Arbeitstemperaturen beginnt sich B1) zu zersetzen (Braunfärbung); homogene schlieren- und stippenfreie Formkörper werden nicht erhalten, da z.B. B1) nicht in eine thermoplastisch verarbeitbare Schmelze überführbar ist; die resultierenden Chemiewerkstoffe weisen außerdem nur ungenügende verbesserte Wärmeformbeständigkeit auf.

Die erfindungsgemäßen Chemiewerkstoffe sind opake Kunststoffe, die mit üblichen Methoden der Kunststoffverarbeitung eingefärbt, pigmentiert, stabilisiert, ausgerüstet und mit Füllstoffen versehen werden können; sie können zur Erzeugung von Kunststoffartikeln mit höherer Wärmestandfestigkeit verwendet werden, z.B. für Heißwasserrohre, Folien, für elektrische Geräte und Kraftfahrzeugteile.

Beispiele

Beispiel 1

Styrol-Maleinsäureanhydrid-Copolymerisate (B1)

Ein Copolymerisat aus 50 Mol-% Maleinsäureanhydrid und 50 Mol-% Styrol wird hergestellt, indem man 98 Gew.-Teile Maleinsäureanhydrid in 400 Gew.-Teilen Toluol bei einer Temperatur von 60 bis 70°C in einem Reaktor vorlegt. Nach Initiierung mit 0,7 Gew.-Teilen Azoisobuttersäurenitril werden 104 Gew.-Teile Styrol innerhalb von 3 Stunden bei 60 bis 70°C zudosiert. Das bei der Polymerisation gebildete Polymerisat fällt im Reaktor aus und kann nach beendeter Polymerisation abfiltriert und gewaschen werden. Das Polymerisat enthält 48,5 Gew.-% Maleinsäureanhydrideinheiten und besitzt einen Staudinger-Index in Aceton von $[\mu] = 0,22$ dl/g.

Beispiel 2

Styrol-Acrylnitril-Copolymerisate (B2)

In einem Reaktor werden 1.000 Gew.-Teile Wasser, 4 Gew.-Teile 1n-Natronlauge und 5 Gew.-Teile disproportionierte Abietinsäure vorgelegt. Bei einer Temperatur von 70°C werden 70 Gew.-Teile der unter 2.1. bis 2.5. angegebenen Monomermischungen in den Reaktor eingegeben. Nach Initiierung mit 3 Gew.-Teilen Kaliumpersulfat in 50 Gew.-Teilen Wasser werden innerhalb von 4 Stunden in den Reaktor eingespeist:

3

```
Monomermischung:  aus Styrol und
                  Acrylnitril
                  (einschließlich        900 Gew.-Teile
                  der vorgelegten
                  70 Gew.-Teile

                  Dodecylmercaptan        2 Gew.-Teile

Emulgatorlösung:  disproportionierte
                  Abietrinsäure          20 Gew.-Teile

                  1n-Natronlauge         15 Gew.-Teile

                  Wasser                600 Gew.-Teile
```

Anschließend wird noch 4 Stunden auspolymerisiert. Die Polymerisate werden aus den Emulsionen durch Koagulation isoliert, gewaschen und getrocknet.

**Verwendete Monomermischungen:**

| Versuch | Styrol Gew.-Teile | Acrylnitril | Acrylnitrilgehalt im Polymerisat Gew.-% |
|---------|--------|-------------|----------------------------------|
| 2.1 | 468 | 432 | 47 |
| 2.2 | 513 | 387 | 42 |
| 2.3 | 558 | 342 | 38 |
| 2.4 | 603 | 297 | 32 |
| 2.5 | 648 | 252 | 27 |

Die Polymerisate besitzen Staudingen-Indices von $[\mu]$ 0,60 dg/l.

Beispiel 3

Herstellung der Polymerisatmischungen

Das Styrol-Maleinsäureanhydrid-Copolymerisat B1) wird in Aceton zu 40 Gew.-%igen Lösungen gelöst.

Die Styrol-Acrylnitril-Copolymerisate B2) werden ebenfalls in Aceton zu 25 Gew.-%igen Lösungen gelöst.

Diese Lösungen werden so gemischt, daß sie 30 Gew.-% B1) und 70 Gew.-% B2) enthalten. Dann wird das Lösungsmittel durch Ausdampfen entfernt.

4

Tabelle 1

| Hergestellte Polymermischungen [B1) und B2)] | | | | | | |
|---|---|---|---|---|---|---|
| Versuch | B1) 30 Gew.-% | B2) 70 Gew.-% aus Versuch | | | | |
| | | 2.1 | 2.2 | 2.3 | 2.4 | 2.5 |
| 3.1 | X | X | | | | |
| 3.2 | X | | X | | | |
| 3.3 | X | | | X | | |
| 3.4 | X | | | | X | |
| 3.5 | X | | | | | X |

Beispiel 4

Thermoplastisches Vinylpolymerisat (A)

Polyvinylchlorid ("Vestolit 56858") mit einem K-Wert von 68.

Beispiel 5

Chemiewerkstoffe

Die Produkte 3.1 bis 3.5 und 4 werden bei 190°C innerhalb 10 min. auf einer Walze compoundiert und danach bei 195°C zu Formkörpern verarbeitet. Als Additive werden 1 Gew.-Teil Irgastab T 22 n; 0,2 Gew.-Teile Loxiol G 70, bezogen auf 100 Gew.-Teile Chemiewerkstoff, zugesetzt. Die Ergebnisse sind in Tabelle 2 zusammengefaßt.

## Tabelle 2

### Eigenschaften der Chemiewerkstoffe

| Ver-such | thermoplastische Vinylpolymerisate 4 Gew.-Teile | Polymerisatmischung 3.1 Gew.-Teile | 3.2 | 3.3 | 3.4 | 3.5 | Polymerisate 2.1(B2) Gew.-Teile | 1 (B1) | Wärmeformbeständigkeit Vicat °C DIN 53400 | Bemerkungen |
|---|---|---|---|---|---|---|---|---|---|---|
| 5.1 | 100 | - | - | - | - | - | - | - | 79 | Vergleich |
| 5.2 | 50 | 50 | - | - | - | - | - | - | 102 | |
| 5.3 | 50 | - | 50 | - | - | - | - | - | 102 | |
| 5.4 | 50 | - | - | 50 | - | - | - | - | 101 | |
| 5.5 | 50 | - | - | - | 50 | - | - | - | 94 | Vergleich |
| 5.6 | 50 | - | - | - | - | 50 | - | - | 91 | Vergleich |
| 5.7 | 50 | - | - | - | - | - | 50 | - | 91 | Vergleich |
| 5.8 | 50 | - | - | - | - | - | - | 50 | nicht verarbeitbar | Vergleich |

Wenn man die Werkstoffe 5.2, 5.3, 5.4 durch direkte Mischung aller Bestandteile, d.h. ohne Vormischen von B2) und B1) herstellt, dann erhält man verfärbte, inhomogene Schlieren und Stippen enthaltende brüchige Formkörper.

Die erfindungsgemäßen Werkstoffe 5.2 bis 5.4 sind opak; ihre Thermostabilität ist hervorragend; Farbtonveränderungen bei Einwirkung von höheren Temperaturen sind nicht festzustellen.

**Patentansprüche**

1. Als thermoplastische Formmassen einsetzbare Chemiewerkstoffe aus

   A) einem thermoplastischen Vinylpolymerisat und

   B) einem Gemisch aus

   B1) einem Copolymerisat von 35 bsi 49 Gew.-% Maleinsäureanhydrid von 65 bis 51 Gew.-% Styrol und

   B2) einem Copolymerisat von Styrol, α-Methylstyrol oder Mischungen daraus einerseits und Acrylnitril andererseits mit einem Acrylnitrilgehalt von 35 bis 60 Gew.-%, [bezogen auf B2)].

2. Verfahren zur Herstellung von Chemiewerkstoffen gemäß Anspruch 1, dadurch gekennzeichnet, daß in einer ersten Stufe die Copolymerisate B1) und B2) in Anwesenheit eines Lösungsmittels für B1) und B2) vermischt, in einer zweiten Stufe das Gemisch von B1) und B2) aus der Lösung abgetrennt und in einer dritten Stufe das Gemisch von B1) und B2) mit dem thermoplastischen Vinylpolymerisat A) vermischt wird.